# EUROPÄISCHE PATENTSCHRIFT

(11) **EP 2 156 743 B1**
(45) Veröffentlichungstag und Bekanntmachung des Hinweises auf die Patenterteilung: **05.12.2012**
(21) Anmeldenummer: 09009526.6
(22) Anmeldetag: 22.07.2009
(51) Int. Cl.: A22C 15/00

(54) **Schneckenschwertlagerung**
Mounting of guide track
Rail de guidage

(30) Priorität: 21.08.2008 DE 102008039154
(43) Veröffentlichungstag der Anmeldung: 24.02.2010
(73) Patentinhaber: Poly-clip System GmbH & Co. KG, 65795 Hattersheim (DE)
(72) Erfinder: Kessler, Günter, 60388 Frankfurt/Main (DE)
(74) Vertreter: Eisenführ, Speiser & Partner

(56) Entgegenhaltungen:
- EP-A- 1 891 860
- EP-A- 1 897 446
- DE-A1-102006 054 039
- DE-C1- 3 806 467

## Beschreibung

Die Erfindung betrifft eine Übergabevorrichtung entsprechend dem Oberbegriff des Anspruchs 1. Insbesondere betrifft die Erfindung eine Vorrichtung zur Übergabe von aus einer Clipmaschine ausgetragenen und mit schlaufenförmigen Aufhängeelementen versehenen, wurstförmigen Produkten an eine Produktaufnahme, mit einem Schwert, entlang dem die Aufhängeelemente mittels Förderelementen in Transportrichtung führbar sind, und mit einer vorderen und einer hinteren Lagereinrichtung für das Schwert, welche eine rechte sowie eine linke Lagereinheit aufweisen, die jeweils paarweise seitlich an dem Schwert angeordnet sind.

In der Praxis ist es bekannt, dass bei der Herstellung von wurstförmigen Produkten, bei denen es sich um mit Wurstbrät gefüllte Wurstprodukte oder andere mit flüssigem, pastösem oder granularem Füllgut, wie z.B. Dichtmasse usw. gefüllte wurstförmige Produkte handeln kann, das Füllgut von einer Füllmaschine über ein Füllrohr einer Clipmaschine zugeführt wird. In der Clipmaschine wird das Füllgut in ein durch einen ersten Clip einseitig verschlossenes, schlauchförmiges Verpackungsmaterial abgefüllt und anschließend das offene Ende des schlauchförmigen Verpackungsmaterials durch Setzen eines zweiten Clips verschlossen. Wenn das so entstandene, wurstförmige Produkt zur weiteren Verarbeitung an eine Produktaufnahme, wie bspw. einen Rauchstab, aufgehängt werden soll, wird vorzugsweise in den zweiten Clip ein Aufhängeelement, meist eine Fadenschlaufe, eingelegt und mit diesem zweiten Clip an dem wurstförmigen Produkt befestigt. Anschließend wird das wurstförmige Produkte mittels einer Transportvorrichtung aus der Clipmaschine ausgetragen und zusammen mit anderen Wurstprodukten auf die Aufnahmestäbe aufgereiht, um weiterverarbeitet zu werden.

Aus der DE-Patentschrift 38 06 467 und EP-A-1 897 446 ist eine Vorrichtung der eingangs genannten Art bekannt. Zur Übergabe von aus der Clipmaschine ausgetragenen und mit schlaufenförmigen Aufhängeelementen versehenen, wurstförmigen Produkten an einen Rauchstab werden in dieser Vorrichtung die Schlaufen der wurstförmigen Produkte über ein Schwert geführt. Das Schwert weist zur Abstützung seitlich neben dem Schwert angeordnete Kolben-/Zylinderanordnungen auf, die in Transportrichtung der wurstförmigen Produkte beidseits des Schwertes aufeinanderfolgend, aber versetzt zueinander angeordnet sind. Die Kolben werden in einem annähernd rechten Winkel zu der Längserstreckung des Schwertes horizontal auf das Schwert zu bewegt, greifen in Ausnehmungen im Schwert ein und halten dieses so in der gewünschten Position. Wird eine Schlaufe einer Wurst über das Schwert hinweg bewegt, werden die Zylinder nacheinander in der entsprechenden Reihenfolge außer Eingriff mit dem Schwert gebracht, um unmittelbar nach dem Passieren der Schlaufe wieder in das Schwert einzugreifen.

Um eine störungsfreie Funktion der Lagerung des Schwertes zu gewährleisten, ist bei der vorbekannten Übergabevorrichtung eine aufwändige Steuerung nötig, die gewährleistet, dass zu jeder Zeit genügend Kolben in das Schwert eingreifen, um dieses sicher in der korrekten Position zu halten. Weiterhin kann die Geschwindigkeit der Bewegung der Kolben nicht beliebig erhöht werden, zum einen aus Gründen der Trägheit der Bauelemente, aber auch aus Sicherheitsgründen, da bei zu hoher Taktzahl der hin- und hergehenden Kolben nicht mehr gewährleistet werden kann, dass das Schwert weiterhin sicher gehalten werden kann.

Es ist daher Aufgabe der vorliegenden Erfindung, eine Übergabevorrichtung der eingangs genannten Art zur Verfügung zu stellen, die die Übergabe auch bei höheren Fördergeschwindigkeiten für die zu übergebenden Produkte sicherer gestaltet.

Die vorstehende Aufgabe wird durch die Merkmale des Anspruchs 1 gelöst. In den sich daran anschließenden Ansprüchen 2 bis 15 finden sich vorteilhafte Ausgestaltungen hierzu.

Insbesondere wird zur Lösung der vorstehenden Aufgabe eine Vorrichtung zur Übergabe von aus einer Clipmaschine ausgetragenen und mit schlaufenförmigen Aufhängeelementen versehenen, wurstförmigen Produkten an eine Produktaufnahme vorgeschlagen. Die Übergabevorrichtung enthält ein Schwert, entlang dem die Aufhängeelemente mittels Förderelementen in Transportrichtung führbar sind sowie eine vordere und eine hintere Lagereinrichtung für das Schwert, welche eine rechte sowie eine linke Lagereinheit aufweisen, die jeweils paarweise seitlich an dem Schwert angeordnet sind. Des Weiteren ist erfindungsgemäß vorgesehen, dass die vordere und die hintere Lagereinrichtung antreibbare Zwangsführungen für die Aufhängeelemente bilden. Auf diese Weise kann das Schwert auch bei höheren Fördergeschwindigkeiten sicher in seiner Position gehalten werden und gleichzeitig ein sehr zuverlässiger Weitertransport der Aufhängeelemente garantiert werden.

Zur Gewährleistung des Weitertransports der Aufhängeelemente ist es dabei vorteilhaft, wenn die Zwangsführung für die Aufhängeelemente durch einen sich zwischen miteinander in Berührung stehenden, sich drehenden Lagerelementen der Lagereinheiten ausbildenden Führungsspalt gebildet ist. Der Führungsspalt kann sich dabei in axialer Richtung, also in Transportrichtung der Aufhängeelemente, entlang der sich berührenden Oberflächen der sich drehenden Lagerelemente erstrecken.

Es ist dabei weiterhin vorteilhaft, wenn zumindest die miteinander in Berührung stehenden Oberflächenabschnitte der Lagerelemente der Lagereinheiten wenigstens abschnittsweise einen hohen Reibungskoeffizienten aufweisen. Dadurch genügt es, nur eines der sich drehenden Lagerelemente anzutreiben. Ein entsprechender Reibungskoeffizient kann durch die Wahl des Materials sowie der Oberflächenbeschaffenheit der Lagerelemente erreicht werden. Eine Möglichkeit hierfür stellt die Schaffung einer elastischen Oberfläche, beispielsweise durch das Auftragen einer Gummierung dar.

Bevorzugt kann des Weiteren zumindest ein Teil der Lagerelemente der Lagereinheiten an ihrem Außenumfang mit wenigstens einer in Transportrichtung gewindeförmig umlaufenden Nut versehen sein. In diesem Fall bildet die Nut einen dann gewindeförmig umlaufenden Führungsspalt, in dem das Aufhängeelement, wie beispielsweise eine Fadenschlaufe, sicher geführt und weitertransportiert werden kann. In diesem Bereich der erfindungsgemäßen Übergabevorrichtung wäre dann auch keine zusätzliche Transportvorrichtung notwendig. Ein solcher Bereich ist ebenfalls als Übergangsbereich, beispielsweise zwischen zwei einander nachgeschalteten Transportvorrichtungen oder zwischen einer Transportvorrichtung und einer ihr nachgeschalteten Vorrichtung, geeignet.

In der erfindungsgemäßen Übergabevorrichtung kann weiterhin vorgesehen sein, dass die rechte und linke Lagereinheit der vorderen und hinteren Lagereinrichtung jeweils wenigstens ein Stützlagerelement sowie zwei Gegenlagerelemente aufweisen, wobei die Mittellängsachse des Stützlagerelements und die Mittellängsachsen der beiden Gegenlagerelemente einer Lagereinheit in einer Weise zueinander angeordnet sind, dass sie, betrachtet in einer Ebene senkrecht zur Transportrichtung, ein Dreieck aufspannen. Dabei können die beiden Gegenlagerelemente einer Lagereinheit, betrachtet in einer Ebene senkrecht zur Transportrichtung, übereinander angeordnet sein.

Durch die vorbeschriebene Anordnung des Stützlagerelements und der Gegenlagerelemente wird erreicht, dass das Stützlagerelement zu jeder Zeit mit den beiden Gegenlagerelementen in jeweils zumindest annähernd linienförmigem Kontakt steht und so das Schwert sicher abgestützt sowie gelagert ist. Ein Verdrehen des Schwerts um seine Längsachse oder ein Verschieben in Transportrichtung ist praktisch ausgeschlossen.

Die Elemente der Lagereinheiten können auf verschiedenste Weise ausgestaltet sein. In einer besonders vorteilhaften Ausführung sind die Gegenlagerelemente einer Lagereinheit durch um ihre Mittellängsachse drehbare Gegenlagerwellen gebildet, deren Achse vorzugsweise im Wesentlichen parallel zur Transportrichtung verlaufen.

Das Stützlagerelement einer Lagereinheit kann, betrachtet in einer Ebene senkrecht zur Transportrichtung, seitlich von und zwischen den beiden Gegenlagerelementen angeordnet sein. Es kann durch eine antreibbare Stützlagerwelle gebildet sein, deren Achse vorzugsweise im Wesentlichen parallel zur Transportrichtung verläuft.

In einer weiterhin vorteilhaften Ausführung können die Stützlagerelemente der beiden rechten und/oder der beiden linken Lagereinheiten der vorderen und hinteren Lagereinrichtung durch eine gemeinsame Stützlagerwelle gebildet sein. Hierdurch wird die Konstruktion der Lagereinheiten und der Antrieb für die Stützlagerelemente vereinfacht.

Es kann dabei bevorzugt sein, dass die Stützlagerwellen der rechten und linken Lagereinheiten durch einen vorzugsweise gemeinsamen Antrieb synchron und in gegenläufige Richtungen antreibbar sind. Ein gemeinsamer Antrieb vereinfacht die Steuerung, beispielsweise der Antriebsgeschwindigkeit. Durch den gegenläufigen Antrieb der Stützlagerwellen wird ein Verkanten und Einklemmen des Schwertes zwischen den Lagereinheiten verhindert.

In einer besonders bevorzugten Ausgestaltung der Lagereinheiten kann das Stützlagerelement einer Lagereinheit an seinem Außenumfang eine konvexe Ausbauchung oder eine konkave Vertiefung besitzen. Die Gegenlagerelemente einer Lagereinheit können dann an ihrem Außenumfang mit zu der konvexen Ausbauchung oder der konkaven Vertiefung des Stützlagerelements korrespondierende Ausgestaltung in Form einer konkaven Vertiefung oder konvexen Ausbauchung versehen sein, die wechselseitig ineinander greifen.

Das wechselseitige Ineinandergreifen der konkaven Vertiefungen und der konvexen Ausbauchung des Stützlagerelements und der Gegenlagerelemente garantiert einen sicheren Halt des Schwertes. Diese aufeinander abgestimmten Formen verhindern ein Verrutschen des Schwertes in dessen axialer Richtung und bilden zudem eine Zentrierung, mittels der die Position des Schwertes genau festgelegt werden kann.

Die Lagereinrichtungen können jeweils Lagereinheiten enthalten, die in vorteilhafter Weise an den Seitenflächen des Schwertes einander gegenüberliegend angeordnet sind. In einer weiterhin bevorzugten Ausführung kann das Schwert durch einen Balken mit vorzugsweise im Wesentlichen rechteckigem Querschnitt gebildet sein, wobei eine vordere Lagereinrichtung des Balkens im in Transportrichtung vorderen Bereich des Schwertes angeordnet, und beabstandet hierzu, eine hintere Lagereinrichtung im in Transportrichtung hinteren Bereich des Schwertes angeordnet sein kann. Die ebenen Flächen des Balkens erleichtern die seitliche Anordnung von Lagerungselementen. Weiterhin wird durch eine ebenen Oberseite das Anbringen einer Nut zum Eingreifen der Hakenelemente vereinfacht.

Durch das Angreifen der vorderen und der hinteren Lagereinrichtung jeweils an den beiden Seitenflächen des Schwertes kann sichergestellt werden, dass die Bereiche unterhalb und oberhalb des Schwertes für das zu transportierende wurstförmige Produkt bzw. für das hakenförmige Übergabeelement frei bleiben.

Es kann weiterhin erfindungsgemäß vorgesehen sein, dass die Gegenlagerelemente der rechten und linken Lagereinheit innerhalb des Schwertes angeordnet sind. Es ist dabei vorteilhaft, wenn das Schwert im Bereich der vorderen und hinteren Lagereinrichtung in Transportrichtung aufeinanderfolgende, vorzugsweise im Wesentlichen quaderförmige Ausnehmungen aufweist, die weiter vorzugsweise einander gegenüberliegend beidseits an den Seitenflächen des Schwertes angeordnet sind und in denen weiterhin vorzugsweise die Gegenlagerelemente angeordnet sind. Die Gegenlagerelemente können sich darüber hinaus vorteilhaft über die gesamte Länge der quaderförmigen Ausnehmungen erstrecken. Die Anordnung der Gegenlagerelemente in den Ausnehmungen des Schwertes verhindert das Hervorstehen von Bauteilen, die den Transport der Aufhängeelemente behindern würden.

Dadurch, dass das Schwert auf seiner Oberseite wenigstens eine sich über dessen gesamte Länge erstreckende Nut aufweist, kann ein über das Schwert geführtes hakenförmiges Übergabeelement als Förderelement für diie wurstförmigen Produkte in diese Nut eingreifen und das Produkt sicher an dem schlaufenförmigen Aufhängeelement erfassen.

Es ist vorteilhaft, wenn das Schwert an seinen Stirnenden Aufnahmemittel zum Anschluss weiterer Vorrichtungen aufweist. Mittels solcher Aufnahmemittel kann die erfindungsgemäße Übergabevorrichtung in entsprechende Aufhängelinien integriert werden. Außerdem wird durch solche Aufnahmemittel ein sicherer Anschluss weiterer Vorrichtungen erreicht, wodurch sich die Prozesssicherheit erhöht.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1:: eine perspektivische, schematische Ansicht der erfindungsgemäßen Übergabevorrichtung;
- Fig. 2:: eine vertikale Schnittdarstellung durch eine an der erfindungsgemäßen Übergabevorrichtung vorgesehene Lagereinrichtung;
- Fig. 3:: eine horizontale, schematische Teilschnittdarstellung einer Lagereinrichtung der erfindungsgemäßen Übergabevorrichtung;
- Fig. 4:: eine schematische Darstellung des Antriebs der antreibbaren Zwangsführung der erfindungsgemäßen Übergabevorrichtung; und
- Fig. 5:: eine perspektivische Ansicht einer möglichen Anbauvorrichtung für die erfindungsgemäße Übergabevorrichtung.

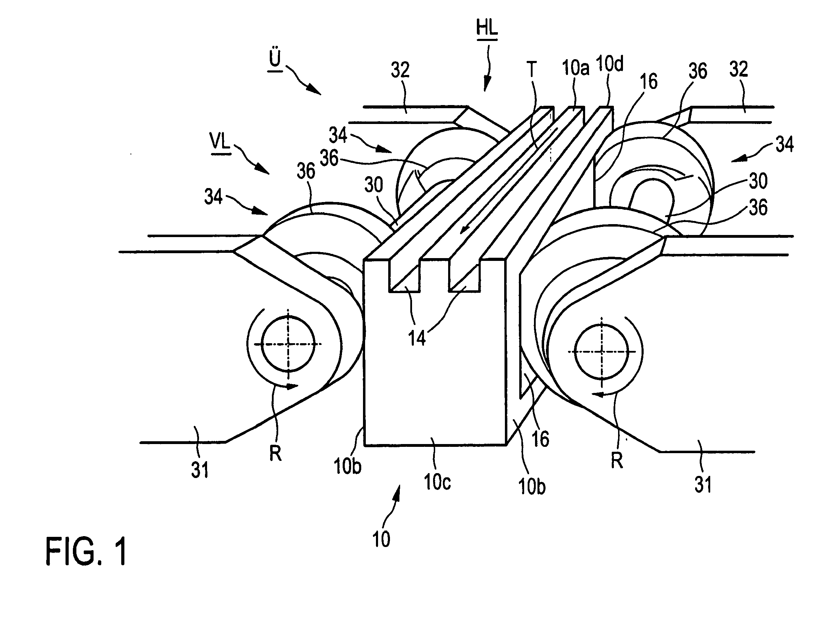

Fig. 1 zeigt eine perspektivische, schematische Ansicht der erfindungsgemäßen Übergabevorrichtung Ü. Diese weist als Hauptbaugruppen ein Schwert 10 sowie eine vordere und eine hintere Lagereinrichtung VL, HL auf. Entlang des Schwertes 10 können an nicht näher dargestellten Aufhängeschlaufen hängende, wurstförmige Produkte mittels ebenfalls nicht näher dargestellter Förderelemente in Förderrichtung T gefördert werden. Die vordere und hintere Lagereinrichtung VL, HL dienen zur schwebenden Lagerung des Schwertes 10 in der Weise, dass der Transport der wurstförmigen Produkte nicht behindert wird.

Das Schwert 10 hat einen im Wesentlichen rechteckigen Querschnitt und erstreckt sich in horizontaler Richtung. Im gezeigten Ausführungsbeispiel sind die Seitenkanten des rechteckförmigen Querschnitts des Schwertes 10 länger als dessen Ober- bzw. Unterkante. Das Schwert 10 besteht aus einem Metall, beispielsweise Aluminium. Es kann aber auch entsprechend der gewählten Anwendung aus Kunststoff oder einem Edelstahl bestehen.

Auf der Oberseite 10a des Schwertes 10 erstrecken sich in Transportrichtung T zwei parallel zueinander sowie zu der nicht dargestellten Mittellängsachse des Schwertes 10 verlaufende Nuten 14 mit ebenfalls rechteckigem Querschnitt. Die zueinander beabstandeten Nuten 14 sind symmetrisch auf der Oberseite 10a des Schwertes 10 angeordnet, d.h. zumindest der Abstand der Nuten 14 zu den Seitenflächen 10b ist gleich.

Das Schwert 10 weist weiterhin vier quaderförmige Ausnehmungen 16 auf, wobei jeweils zwei auf jeder Seitenfläche 10b des Schwertes 10 einander gegenüberliegend in der Nähe der Stirnseiten 10c, 10d angeordnet sind. In Fig. 1 ist lediglich eine Ausnehmungen 16 auf der in Fig. 1 sichtbaren rechten Seitenfläche 10b zu sehen sind.

Die linke und rechte Lagereinheit 30, 34; 40, 42 der vorderen und hinteren Lagereinrichtung VL, HL sind identisch aufgebaut, so dass nachstehend, stellvertretend für alle übrigen, die rechte Lagereinheit 30, 34; 40, 42 der vorderen Lagereinrichtung VL beschrieben wird. Sie enthält im Wesentlichen ein Stützlagerelement 30, 34 sowie ein Gegenlagerelement 40, 42. Das Stützlagerelement 30, 34 wird durch eine Stützlagerwelle 30, 34 gebildet.

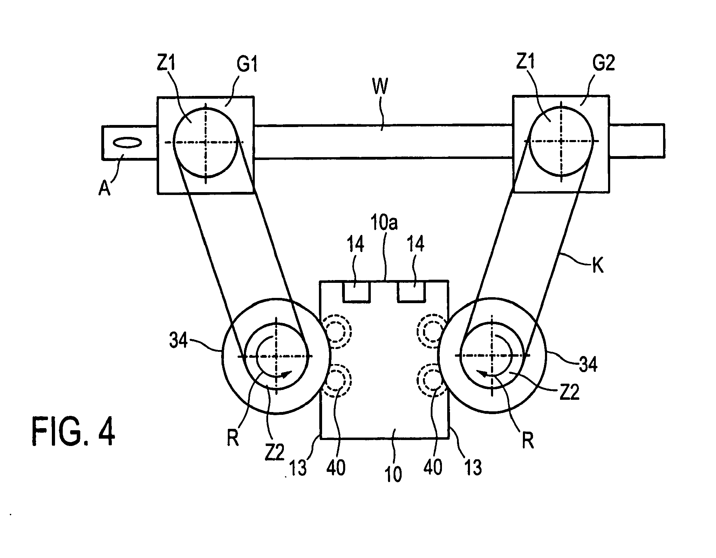

In einer horizontal verlaufenden Mittelebene durch das Schwert 10 sowie neben dem Schwert 10 und parallel zu diesem ist rechts und links des Schwertes 10 jeweils eine Stützlagerwelle 30 mit gleichem Abstand zum Schwert 10 angeordnet. Die Stützlagerwelle 30 ist im Bereich ihrer Enden in Lagern 31, 32 drehbar und axial nicht verschiebbar gehalten. Die Lager 30, 31 sind durch an sich bekannte Kugellager o.ä. gebildet, die in entsprechenden Lagerschalen aufgenommen sind. Die Lager 31, 32 weisen ebenfalls nicht dargestellte Einstellelemente zur Einstellung des Lagerspiels und zur genauen Ausrichtung der Stützlagerwellen 30 zum Schwert 10 auf. Die Lager 31, 32 sind an einem nicht näher dargestellten Maschinenrahmen abgestützt. Das in Fig. 1 nicht sichtbare hintere Ende der Stützlagerwelle 30 ragt aus dem Lager 32 heraus und weist eine Aufnahme für ein Antriebselement Z2, wie ein Zahnrad oder eine Riemenscheibe auf, mittels dem ein Drehmoment auf die Stützlagerwelle 30 übertragen werden kann und wie dies im Zusammenhang mit Fig. 4 näher erläutert wird. Diese Aufnahme kann bspw. durch eine Nut für eine Nut-Feder-Verbindung oder andere bekannte Welle-Nabe-Verbindungen realisiert sein.

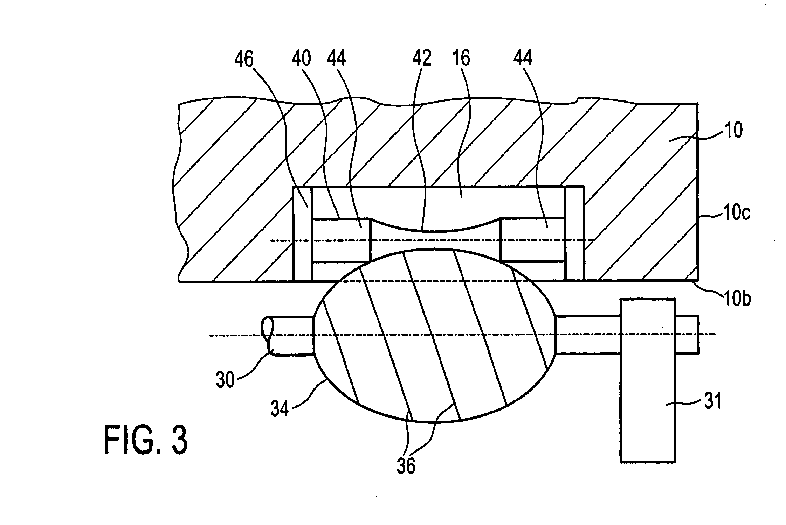

Wie weiterhin in Fig. 1 bzw. Fig. 3 zu sehen ist, weist die Stützlagerwelle 30 im Bereich seiner Enden Ausbauchungen 34 mit einer konvexen Hüllfläche auf. Auf der Oberfläche der Ausbauchungen 34 sind gewindeförmig in Transportrichtung T verlaufende Furchen 36 angeordnet. Anstelle der gewindeförmigen Furchen können ebenfalls gewindeförmig verlaufende Erhebungen vorgesehen sein.

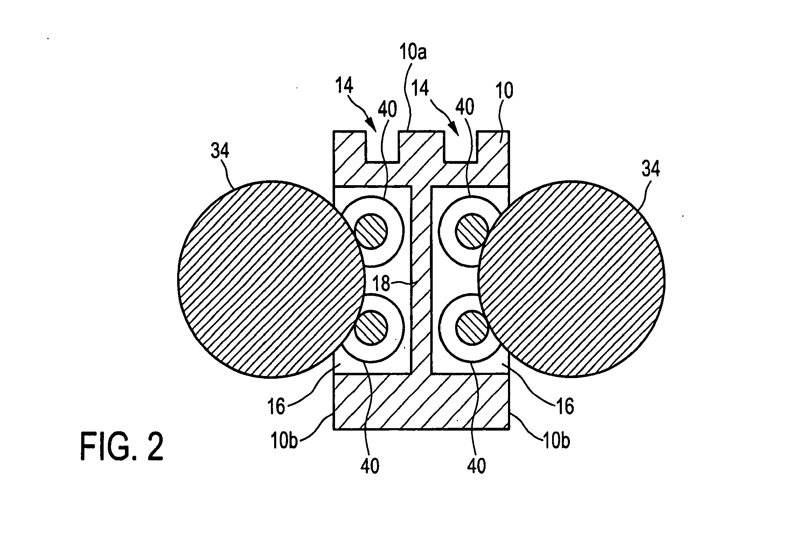

Der Abstand der Stützlagerwelle 30 von dem Schwert 10 sowie die Form, der Durchmesser und die Position der Ausbauchungen 34 der Stützlagerwelle 30 sind so gewählt, dass die Ausbauchungen 34 in die quaderförmigen Ausnehmungen 16 des Schwertes 10 eingreifen. Sie kommen dabei ausschließlich mit den beiden Gegenlagerelementen 40 in Kontakt, die in den Ausnehmungen 16 des Schwertes 10 angeordnet sind und wie sie im Zusammenhang mit Fig. 2 und 3 näher erläutert werden.

Die Ausbauchungen 34 können einstückig mit der Stützlagerwelle 30 hergestellt sein. Sie können aber auch als separate Bauteile gefertigt und mit geeigneten Befestigungsmitteln auf der Stützlagerwelle 30 angebracht worden sein. Im letzteren Fall ist eine nachträgliche axiale Ausrichtung der Ausbauchungen 34 auf der Stützlagerwelle 30 durch axiales Verschieben möglich.

Mit R ist die Rotationsrichtung der Stützlagerwellen 30 gekennzeichnet. Wie in Fig. 1 zu sehen ist, drehen sich die beiden Stützlagerwellen 30 in entgegengesetzter Richtung. Die auf der Oberfläche der Ausbauchungen angeordneten Gewindefurchen 36 verlaufen auf den Ausbauchungen 34 einer Stützlagerwelle 30 in gleicher Richtung und auf den einander gegenüberliegenden Ausbauchungen 34 in entgegengesetzter Richtung. Durch diese Ausrichtung der Gewindefurchen 36 auf den Ausbauchungen 34 wird erreicht, dass eine das Schwert 10 umgreifende Schlaufe beim Passieren der Lagereinrichtungen VL, HL in Transportrichtung T befördert wird.

Wie in Fig. 1 dargestellt, rotiert die rechte Stützlagerwelle 30 im Uhrzeigersinn, wogegen die linke Welle 30 entgegen dem Uhrzeigersinn dreht. Aufgrund dieser als bevorzugt anzusehenden Rotationsrichtungen der Stützlagerwellen 30 wird eine auf das Schwert 10 wirkende, vertikal nach oben gerichtete Kraft erzeugt, die der Gewichtskraft der mit ihren Aufhängeelementen an dem Schwert 10 hängenden wurstförmigen Produkte entgegenwirkt und ein eventuelles Verkeilen des Schwertes 10 zwischen den Lagereinrichtungen VL, HL verhindert. Es ist selbstverständlich auch möglich, jede andere als die gezeigten Rotationsrichtungen zu wählen, da durch die Konstruktion der Lagereinrichtungen VL, VH ein sicherer Betrieb gewährleistet ist.

Fig. 2 zeigt eine Schnittdarstellung durch eine der beiden identischen Lagerungen VL, VH des Schwertes 10 in einer Ebene senkrecht zur Stützlagerwelle 30. Im Schwert 10 sind die einander gegenüberliegenden quaderförmigen Ausnehmungen 16 symmetrisch zueinander angeordnet. Sie sind vertikal mittig zum Schwert ausgerichtet und erstrecken sich von den Seitenflächen 10b in das Innere des Schwertes 10 hinein. Die Ausnehmungen 16 sind durch einen senkrecht durch die Mitte des Schwertes 10 verlaufenden Steg 18 voneinander getrennt.

In jeder Ausnehmung 16 sind zwei Gegenlagerelemente 40 in Form von drehbaren Gegenlagerwellen angeordnet. Sie verlaufen achsparallel zur Stützlagerwelle 30 und sind vertikal übereinander ausgerichtet. Sie weisen weiterhin den gleichen vertikalen Abstand zu einer gedachten Ebene durch die Stützlagerwelle 30 auf. Durch diese Anordnung der Gegenlagerelemente 40 berührt die Ausbauchung 34 zu jeder Zeit beide Gegenlagerelemente 40 einer Ausnehmung 16.

Fig. 3 zeigt einen horizontalen Teilschnitt durch die in Fig. 1 vordere Lagerung VL des Schwertes 10. In der Ausnehmung 16 ist eine der beiden Gegenlagerwellen 40 dargestellt. Die im wesentlichen zylindrische Gegenlagerwelle 40 weist einen mittleren Abschnitt 42 mit einer konvex verlaufenden Oberfläche auf. Nach rechts und links schließen sich zylindrische Abschnitte 44 an, die in Lagerschalen 46 aufgenommen werden. Die Gegenlagerwellen 40 sind in den Lagerschalen 46 um ihre Längsachse drehbar und axial fest gelagert. Die Höhe und Tiefe der Lagerschalen 46 entspricht der lichten Höhe und der Tiefe der Ausnehmungen 16, sodass sie an den Seitenflächen 13 der Schwertes 10 bündig abschließen. In den Lagerschalen 46 können z.B. Kugellager eingesetzt sein. Die Lagerung der Gegenlagerwellen 40 in den Lagerschalen 46 kann aber auch durch eine Gleitlagerung realisiert sein.

Wie weiter in Fig. 3 zu sehen ist, entspricht die Länge der Gegenlagerwellen 40 mit den daran befestigten Lagerschalen 46 der Länge der Ausnehmungen 16. Die beispielsweise als Modul eingesetzte Einheit aus Gegenlagerwellen 40 und Lagerschalen 46 kann so innerhalb der Ausnehmung 16 nicht verkanten. Sie benötigt lediglich ein geringes axiales Spiel um eine Rotation der Stützelemente zu ermöglichen.

Die parallel zum Schwert 10 verlaufende Stützlagerwelle 30 weist, wie bereits erwähnt, Ausbauchungen 34 auf. Die in Fig. 3 schematisch dargestellte Ausbauchung 34 weist, ebenfalls schematisch dargestellt, gewindeförmig verlaufende Furchen 36 auf. Für die Transportfunktion reicht es aus, wenn nur eine Gewindefurche 36 auf der Ausbauchung 34 angeordnet ist. Es können aber auch mehr als eine Gewindefurche 36 vorhanden sein. Bei gleicher Drehzahl der Stützlagerwelle 30 kann durch die Änderung der Anzahl oder der Steigung der Gewindefurchen 36 die Transportgeschwindigkeit verändert werden.

Fig. 3 zeigt weiterhin, dass die Wölbung der konkaven Oberfläche der Abschnitts 42 der Gegenlagerwelle 40 der Wölbung der konvexen Ausbauchung 34 entspricht. Hierdurch wird gewährleistet, dass die Ausbauchung 34 zu jeder Zeit in einer in axialer Richtung über ihre konkave Oberfläche verlaufenden Linie an dem konkaven Abschnitt 42 der Gegenlagerwelle 40 anliegen und das Schwert 10 sicher abgestützt wird. Diese Linie wird von den Gewindefurchen 36 unterbrochen, sodass sich die Ausbauchung 34 und der konkave Abschnitt 42 der Gegenlagerwelle 40 in mehreren Punkten berühren, die auf der vorbeschriebenen Linie liegen. Die Anzahl dieser Berührungspunkte pro Linie wird durch die Anzahl und die Steigung der Gewindefurchen 36 bestimmt.

Da in jeder Ausnehmung 16 wenigstens zwei Gegenlagerwellen 40 angeordnet sind, ergeben sich für jede Ausbauchung 34 mindestens zwei solcher Berührungslinien bzw. Linien von Berührungspunkten mit den entsprechenden Gegenlagerwellen 40.

Fig. 4 zeigt eine schematische Darstellung des Antriebs der antreibbaren Zwangsführung der erfindungsgemäßen Übergabevorrichtung der Stützlagerwellen 30. Der Antrieb besteht im Wesentlichen aus zwei Getrieben G1, G2, die mittels einer Verbindungswelle W miteinander gekoppelt sind. Jedes der Getriebe G1, G2 weist einen Abtriebszapfen auf der jeweils durch ein Übertragungselement K mit einer der Stützlagerwellen 30 verbunden ist.

Wie Fig. 4 zeigt, sind oberhalb des Schwertes 10 die beiden Getriebe G1, G2 in einer horizontalen Ebene angeordnet. Sie sind durch die Verbindungswelle W vorzugsweise drehzahlfest miteinander gekoppelt. Das Getriebe G1 weist einen horizontal nach links ausgerichteten Antriebszapfen A auf, um ein Drehmoment, das beispielsweise von einem Elektromotor auf den Antriebszapfen A übertragen wird, in das Getriebe G1 einzuleiten. Das Getriebe G2 ist an das im wesentlichen baugleiche Getriebe G1 durch die horizontal ausgerichtete Verbindungswelle W gekoppelt, die vorzugsweise die gleiche Drehzahl auf das Getriebe G2 überträgt, wie sie vom Antriebszapfen A in das Getriebe G1 eingeleitet wird.

Die Getriebe G1, G2 weisen einen horizontal und rechtwinklig zum Antriebszapfen A und zur Verbindungswelle V ausgerichteten Abtrieb auf, auf dem jeweils ein Antriebselement Z1 wie ein Zahnrad oder auch eine Riemenscheibe angebracht ist. Die Getriebe G1, G2 sind weiterhin so ausgerichtet, dass die Antriebselemente Z1 der Getriebe G1, G2 und die Antriebselemente Z2 der Wellen 30 in einer Ebene liegen. Das Übertragungselement K, wie eine Kette oder ein Riemen, verbindet die Antriebselemente Z1 der Getriebe G1, G2 und die Antriebselemente Z2 der Stützlagerwellen 30. Dabei entspricht die Rotationsrichtung der Antriebselemente Z1 der Getriebe G1, G2 der Rotationsrichtung R der Antriebselemente Z2 der Stützlagerwellen 30.

Die Getriebe G1, G2 sind vorzugsweise Zahnradgetriebe mit fester Übersetzung, sie können aber auch durch andere Getriebearten gebildet sein, wie beispielsweise Reibgetriebe, hydraulische oder pneumatische Getriebe. Über den Durchmesser bzw. die Zähnezahl der Antriebselemente Z1, Z2 ist eine weitere Einstellung der Drehzahl der Stützlagerwellen 30 möglich.

Jeweils ein Paar der einander gegenüberliegenden Ausbauchungen 34 sowie die Gegenlagerelemente 40, an denen die Ausbauchungen 34 anliegen, bilden die vordere bzw. die hintere Lagerung VL, HL, in denen das Schwert 10 schwebend gelagert ist. Mit anderen Worten, das Schwert 10 ist mit keinem weiteren Bauteil der Übergabevorrichtung oder des Maschinenrahmens fest verbunden.

Das Schwert 10 kann an seinen Stirnseiten 10c Aufnahmen aufweisen, die den direkten oder indirekten Anschluss von vor- oder nachschaltbaren Vorrichtungen ermöglicht. Solche Aufnahmen könne durch formschlüssige Führungen gebildet sein, wie Schwalbenschwanzführungen, Zylinder- oder Rechteckführungen. Es ist ebenfalls möglich, in den glatten Stirnflächen 10c des Schwertes 10 Gewindebohrungen vorzusehen, um Bauteile oder Vorrichtungen mittels Schrauben am Schwert 10 zu befestigen oder diese zusätzlich zu den vorbeschriebenen Führungen vorzusehen, beispielsweise als Sicherungselemente.

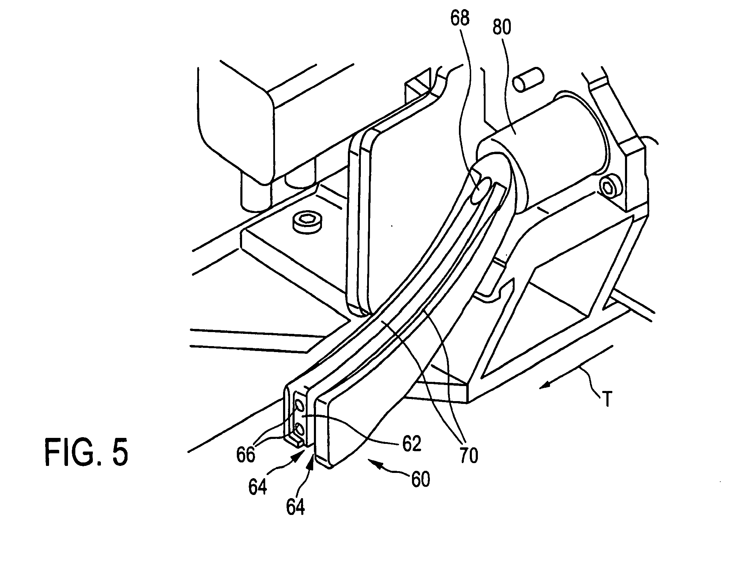

Fig. 5 zeigt eine solche, dem Schwert 10 vorschaltbare Vorrichtung 80 in Form einer Förderschnecke. Zur Anpassung der verschiedenen Querschnitte des Schwertes 10 und der Förderschnecke 80 ist ein Übergangselement 60 zwischengeschaltet. Dieses besteht vorzugsweise aus dem gleichen Material, wie das Schwert 10.

Die in Transportrichtung T weisende und in Fig. 4 freie Stirnfläche 62 des Übergangselements 60 weist den gleichen Querschnitt auf, wie das Schwert 10. Entgegen der Transportrichtung T erstreckt sich das Übergangselement 60 von seinem schwertseitigen Ende in einem kreissegmentförmigen Bogen nach oben. Dabei ändert sich sein Querschnitt annähernd kontinuierlich von quadratisch in kreisrund, wobei das förderschneckenseitige Ende in einen horizontal ausgerichteten, im Wesentlichen zylindrischen Zapfen ausläuft. Die Oberseite des Übergangselements 60 bildet eine entlang dieses kreissegmentförmigen Bogens nach oben geschwungene Ebene, in die zwei parallel in Transportrichtung T verlaufende Nuten 70 eingearbeitet sind.

Das Übergangselement 60 wird mit der Stirnfläche 62 an der in Fig. 1 hinteren Stirnfläche 10d des Schwerts 10 befestigt. In der Stirnfläche 62 des Übergangselements 60 verlaufen zwei parallele, senkrechte Nuten 64. Weiterhin sind zwischen den Nuten 64 vertikal übereinander zwei horizontal in Transportrichtung T verlaufende Durchgangsbohrungen 66 angeordnet. Die Stirnfläche 10d des Schwertes 10 weist zwei den Nuten 64 entsprechende Absätze auf, die in die Nuten 64 eingreifen und so eine formschlüssige Verbindung herstellen. Zusätzlich wird das Übergangselement 60 mit zwei Schrauben, die durch die Durchgangsbohrungen 66 geführt und in entsprechende Gewindebohrungen in der Stirnfläche 10d des Schwertes 10 geschraubt werden gesichert. Im montierten Zustand gehen die Nuten 70 des Übergangselements 60 übergangslos in die Nuten 14 des Schwertes 10 über.

Das in Transportrichtung T hintere, horizontal verlaufende Ende des Übergangselements 60 weist, wie bereits erwähnt, einen kreisförmigen Querschnitt auf. Eine zwischen den in Fig. 5 rechten Enden der Nuten 70 beginnende Durchgangsbohrung 68 verläuft horizontal entgegen der Transportrichtung T. Die Transportschnecke 80 ist mit dem in Fig. 5 rechten, hinteren Ende des Übergangselements 60 verbunden. Hierzu ist das zylindrische Ende in eine entsprechende stirnseitige Ausnehmung der Transportschnecke 80 eingesetzt und mittels einer nicht näher dargestellten Schraube, die durch die Durchgangsbohrung 68 geführt ist, gegen Herausrutschen und Verdrehen gesichert.

Im Betrieb wird ein in der Clipmaschine fertiggestelltes und mit einer Aufhängeschlaufe versehenes wurstförmiges Produkt an der Transportschnecke 80 hängend von der Clipmaschine weg transportiert. Am in Transportrichtung T weisenden Ende der Transportschnecke 80 gleitet das wurstförmige Produkt an der Schlaufe hängend am Übergangselement 60 entlang bis zum hinteren Ende des Schwertes 10. Die Schlaufe umgreift dabei nacheinander die Transportschnecke 80, das Übergangselement 60 und das Schwert 10.

An einem parallel oberhalb des Schwertes 10 angeordneten Kettenförderer sind nicht dargestellte Greifelemente so geführt, dass sich ihre beiden parallel zueinander angeordneten Hakenelemente in einem ersten Umlenkpunkt des Kettenförderers zunächst durch die Nuten 70 bewegen. An einem sich hieran anschließenden parallel zum Schwert 10 verlaufenden Kettenfördererabschnitt werden die Hakenelemente horizontal durch die Nuten 14 des Schwertes 10 geführt. Während dieser Bewegung befinden sich die Hakenelemente in einer die Schlaufen aufnehmenden und haltenden Position, d.h. ihr unteres Ende verläuft parallel zu und in den Nuten 70, 14 des Übergangselements 60 und des Schwertes 10.

Durch die Förderbewegung des Kettenförderers wird das wurstförmige Produkt in Transportrichtung T entlang des Schwertes 10 vorwärts bewegt und passiert die Lagereinrichtungen VL, HL des Schwertes 10. Das Schwert 10 wird, wie vorstehend erläutert, von den konvexen Ausbauchungen 34, die in Ausnehmungen 16 des Schwertes 10 eingreifen gehalten. Die mit den Stützlagerwellen 30 fest verbundenen Ausbauchungen 34 rotieren mit den Stützlagerwellen 30. Die Ausbauchungen 34 weisen auf ihren Oberflächen gewindeförmig verlaufende Furchen 36 auf. Da sich die Schlaufe zwischen zwei benachbarten Erhebungen der Gewindefurchen 36 bewegt, wird ihr Transport von den am Außenumfang der Ausbauchungen 34 anliegenden Gegenlagerwellen 40 während der Bewegung der Schlaufe durch die Lagereinrichtungen VL, HL nicht beeinträchtigt sondern zusätzlich begünstigt.

Am in Transportrichtung T vorderen Ende des Schwertes 10 kann sich eine weiter, nicht gezeigte Vorrichtung zur Aufnahme der wurstförmigen Produkte anschließen, wie beispielsweise ein Rauchstab in einer geeigneten Halterung. Zum sicheren Halten einer solchen Vorrichtung kann die Stirnseite 10c des Schwertes 10 eine korrespondierende Aufnahme aufweisen, wie beispielsweise Nuten oder als Auflage dienende Vorsprünge.

Das im vorstehend erläuterten Ausführungsbeispiel beschriebene Schwert 10 weist zwei auf seiner Oberseite verlaufende Nuten 14 auf. Es ist prinzipiell aber möglich nur eine oder auch mehr als zwei Nuten 14 vorzusehen.

Es ist weiterhin denkbar, dass vor allem bei einem sehr langen Schwert oder bei schweren wurstförmigen Produkten mehr als zwei Lagereinrichtungen VL, HL für das Schwert 10 vorgesehen werden, um ein Durchbiegen zu vermeiden.

Anders als im gezeigten Ausführungsbeispiel können die dort einander gegenüberliegenden Ausbauchungen einer Lagereinrichtung VL, HL auch versetzt zueinander entlang des Schwertes 10 angeordnet sein, wobei weiterhin eine sichere Lagerung des Schwertes 10 gewährleistet bleibt. Auch die Anzahl der Ausbauchungen 34 kann variieren. Im einfachsten Fall genügen zwei Ausbauchungen 34, die in eine Seitenfläche 10b des Schwertes 10 eingreifen und eine Ausbauchung 34, die in die gegenüberliegende Seitenfläche 10b des Schwertes 10 eingreift.

Es ist aber ebenfalls möglich, mehr als zwei Ausbauchungen 34 auf jeder Seite des Schwertes 10 versetzt zueinander anzuordnen, oder auch nur eine Ausbauchung 34, die sich über die gesamte Länge des Schwertes 10 erstreckt. Hierdurch wird allein durch die Ausbauchungen 34 mit ihren gewindeförmigen Furchen 36 ein Transport der an den Aufhängeelementen am Schwert 10 hängenden Wurstprodukte entlang des Schwertes 10 ermöglicht.

Die beiden Lagereinheiten 30, 34; 40, 42 einer der vorderen und hinteren Lagereinrichtung VL, HL können aber auch so vereinfacht gestaltet sein, dass lediglich zwei vertikal übereinander angeordnete Gegenlagerwellen 40 vorgesehen sind, in die die Stützlagerelemente 30, 34 der beiden einander gegenüberliegenden Stützlagerwellen 30 eingreifen. In diesem Fall sind an dem Schwert 10 nicht zwei einander gegenüberliegende Ausnehmungen 16 je Lagereinrichtung VL, HL vorgesehen, sondern nur von eine, sich zwischen den Seitenflächen 10b des Schwertes 10 erstreckende Ausnehmung in dessen Mitte die beiden Gegenlagerwellen 40 vertikal übereinander angeordnet sind.

Das Schwert 10 des vorstehenden Ausführungsbeispiels ist waagerecht ausgerichtet. Die vorgeschlagenen Lagereinrichtungen VL, HL erlauben aber auch, das Schwert 10 in einem annähernd beliebigen Winkel zur Waagerechten auszurichten, um beispielsweise Höhenunterschiede zwischen Maschinenkomponenten zu überwinden. In einem Solchen Fall ist es dann vorteilhaft, auch den Kettenförderer, der die Hakenelemente trägt, in dem entsprechenden Winkel auszurichten.

Die erfindungsgemäße Übergabevorrichtung ist aber nicht auf die vorgeschlagene Anwendung zur Übergabe von wurstförmigen Produkten beschränkt. Prinzipiell können mit ihr alle Produkte, die über ein entsprechendes schlaufenförmiges Aufhängeelement verfügen, transportiert und übergeben werden.

## Patentansprüche

1. Vorrichtung zur Übergabe von aus einer Clipmaschine ausgetragenen und mit schlaufenförmigen Aufhängeelementen versehenen, wurstförmigen Produkten an eine Produktaufnahme, mit einem Schwert (10), entlang dem die Aufhängeelemente mittels Förderelementen in Transportrichtung (T) führbar sind, und mit einer vorderen und einer hinteren Lagereinrichtung (VL, HL) für das Schwert (10), welche eine rechte sowie eine linke Lagereinheit (30, 34; 40, 42) aufweisen, die jeweils paarweise seitlich an dem Schwert (10) angeordnet sind, wobei
die vordere und die hintere Lagereinrichtung (VL, HL) antreibbare Zwangsführungen für die Aufhängeelemente bilden, und wobei die rechte und linke Lagereinheit (30, 34; 40, 42) der vorderen und hinteren Lagereinrichtung (VL, HL) jeweils wenigstens ein Stützlagerelement (30, 34) sowie zwei Gegenlagerelemente (40, 42) aufweisen,
**dadurch gekennzeichnet, dass** das Stützlagerelement (30, 34) einer Lagereinheit (30, 34; 40, 42) durch eine antreibbare Stützlagerwelle (30) gebildet ist, deren
Achse im Wesentlichen parallel zur Transportrichtung (T) verläuft, wobei die Stützlagerelemente (30,34) der beiden rechten und/oder der beiden linken Lagereinheiten (30, 34; 40, 42) der vorderen und hinteren Lagereinrichtung (VL, HL) durch eine gemeinsame Stützlagerwelle (30) gebildet sind.

2. Übergabevorrichtung nach Anspruch,1,
**dadurch gekennzeichnet, dass** eine Zwangsführung für die Aufhängeelemente durch einen sich zwischen miteinander in Berührung stehenden und sich drehenden Lagerelementen der Lagereinheiten (30, 34; 40, 42) ausbildenden Führungsspalt gebildet ist.

3. Übergabevorrichtung nach Anspruch 1 oder 2,
**dadurch gekennzeichnet, dass** zumindest ein Teil der Lagerelemente der Lagereinheiten (30, 34; 40,42) an ihrem Außenumfang mit wenigstens einer in Transportrichtung (T) gewindeförmig umlaufenden Nut (36) versehen ist.

4. Übergabevorrichtung nach Anspruch 1,
**dadurch gekennzeichnet, dass** die Mittellängsachse des Stützlagerelements (30, 34) und die Mittellängsachsen der beiden Gegenlagerelemente (40, 42) einer Lagereinheit (30, 34; 40, 42) in einer Weise zueinander angeordnet sind, dass sie, betrachtet in einer Ebene senkrecht zur Transportrichtung (T), ein Dreieck aufspannen.

5. Übergabevorrichtung nach Anspruch 1 oder 4,
**dadurch gekennzeichnet, dass** die beiden Gegenlagerelemente (40, 42) einer Lagereinheit (30, 34; 40, 42), betrachtet in einer Ebene senkrecht zur Transportrichtung (T), übereinander angeordnet sind.

6. Übergabevorrichtung nach einem der Ansprüche 1 bis 5,
**dadurch gekennzeichnet, dass** das Stützlagerelement (30, 34), betrachtet in einer Ebene senkrecht zur Transportrichtung (T), seitlich von und zwischen den beiden Gegenlagerelementen (30, 34) angeordnet ist.

7. Übergabevorrichtung nach Anspruch 1,
**dadurch gekennzeichnet, dass** die Stützlagerwellen (30) der rechten und linken Lagereinheiten (30, 34; 40, 42) durch einen vorzugsweise gemeinsamen Antrieb (A, G1, G2, W, K) synchron und in gegenläufige Richtungen antreibbar sind.

8. Übergabevorrichtung nach einem der Ansprüche 1 bis 7,
**dadurch gekennzeichnet, dass** das Stützlagerelement (30, 34) einer Lagereinheit (30, 34; 40, 42) an seinem Außenumfang eine konvexe Ausbauchung (34) oder eine konkave Vertiefung besitzt.

9. Übergabevorrichtung nach einem der Ansprüche 1 bis 8,
**dadurch gekennzeichnet, dass** die erste und die zweite Lagereinheit (30. 34; 40, 42) an den Seitenflächen (10b) des Schwertes (10) einander gegen-überliegend angeordnet sind.

10. Übergabevorrichtung nach einem der Ansprüche 1 bis 9,
**dadurch gekennzeichnet, dass** das Schwert (10) mit Ausnehmungen (16) versehen ist, die in Transportrichtung (T) aufeinanderfolgend beidseits an dem Schwert (10) vorgesehen sind.

11. Übergabevorrichtung nach Anspruch 10,
**dadurch gekennzeichnet, dass** die Ausnehmungen (16) quer zur Transportrichtung (T) einander gegenüberliegend an den Seitenflächen (10b) des Schwertes (10) angeordnet sind.

12. Übergabevorrichtung nach Anspruch 10 oder 11,
**dadurch gekennzeichnet, dass** die wenigstens zwei Gegenlagerelemente (40) einer Lagereinheit (30, 32; 40, 42) innerhalb jeweils einer Ausnehmung (16) des Schwertes (10) angeordnet sind.

13. Übergabevorrichtung nach einem der Ansprüche 11 bis 12,
**dadurch gekennzeichnet, dass** sich das Gegenlagerelement (40) über die gesamte Länge der Ausnehmung (16) erstreckt.

14. Übergabevorrichtung nach einem der Ansprüche 1 bis 13,
**dadurch gekennzeichnet, dass** das Schwert (10) auf seiner Oberseite (10a) wenigstens eine sich über dessen gesamte Länge erstreckende Nut (14) aufweist.

15. Übergabevorrichtung nach einem der Ansprüche 1 bis 14,
**dadurch gekennzeichnet, dass** das Schwert (10) an seinen Stirnenden (10c, 10d) Aufnahmemittel zum Anschluss weiterer Vorrichtungen aufweist.

## Claims

1. Apparatus for transferring sausage-shaped products which are discharged from a clipping machine and which are provided with loop-shaped suspension elements to a product receiving means, comprising a bar (10) along which the suspension elements can be guided in the transport direction (T) by means of conveyor elements, and a front and a rear mounting device (VL, HL) for the bar (10), which have a right-hand and a left-hand mounting unit (30, 34; 40, 42) which are respectively arranged in paired relationship laterally on the bar (10), wherein
the front and the rear mounting devices (VL, HL) form drivable positive guide devices for the suspension elements, and wherein
the right-hand and left-hand mounting units (30, 34; 40, 42) of the front and rear mounting devices (VL, HL) respectively have at least one support mounting element (30, 34) and two counterpart mounting elements (40, 42),
**characterised in that** the support mounting element (30, 34) of a mounting unit (30, 34; 40, 42) is formed by a drivable support mounting shaft (30) whose axis extends substantially parallel to the transport direction (T), wherein the support mounting elements (30, 34) of the two right-hand and/or the two left-hand mounting units (30, 34; 40, 42) of the front and rear mounting devices (VL, HL) are formed by a common support mounting shaft (30).

2. A transfer apparatus according to claim 1 **characterised in that** a positive guide means for the suspension elements is formed by a guide gap provided between mutually contacting and rotating mounting elements of the mounting units (30, 34; 40, 42).

3. A transfer apparatus according to claim 1 or claim 2 **characterised in that** at least a part of the mounting elements of the mounting units (30, 34; 40, 42) is provided at the outside periphery thereof with at least one groove (36) peripherally extending in thread form in the transport direction (T).

4. A transfer apparatus according to claim 1 **characterised in that** the longitudinal central axis of the support mounting element (30, 34) and the central longitudinal axes of the two counterpart mounting elements (40, 42) of a mounting unit (30, 34; 40, 42) are arranged relative to each other in such a way that viewed in a plane perpendicularly to the transport direction (T) they define a triangle.

5. A transfer apparatus according to claim 1 or claim 4 **characterised in that** the two counterpart elements (40, 42) of a mounting unit (30, 34; 40, 42) viewed in a plane perpendicularly to the transport direction (T) are arranged in mutually superposed relationship.

6. A transfer apparatus according to one of claims 1 to 5 **characterised in that** the support mounting element (30, 34) viewed in a plane perpendicularly to the transport direction (T) is arranged laterally of and between the two counterpart mounting elements (30, 34).

7. A transfer apparatus according to claim 1 **characterised in that** the support mounting shafts (30) of the right-hand and left-hand mounting units (30, 34; 40, 42) are drivable by a preferably common drive (A, G1, G2, W, K) synchronously and in opposite directions.

8. A transfer apparatus according to one of claims 1 to 7 **characterised in that** the support mounting element (30, 34) of a mounting unit (30, 34; 40, 42) has at its outside periphery a convex protrusion (34) or a concave depression.

9. A transfer apparatus according to one of claims 1 to 8 **characterised in that** the first and second mounting units (30, 34; 40, 42) are arranged in mutually opposite relationship at the side surfaces (10b) of the bar (10).

10. A transfer apparatus according to one of claims 1 to 9 **characterised in that** the bar (10) is provided with recesses (16) which are provided in succession in the transport direction (T) in both sides on the bar (10).

11. A transfer apparatus according to claim 10 **characterised in that** the recesses (16) are arranged transversely relative to the transport direction (T) in mutually opposite relationship at the side surfaces (10b) of the bar (10).

12. A transfer apparatus according to claim 10 or claim 11 **characterised in that** the at least two counterpart mounting elements (40) of a mounting unit (30, 34; 40, 42) are arranged within a respective recess (16) of the bar (10).

13. A transfer apparatus according to one of claims 11 to 12 **characterised in that** the counterpart bearing element (40) extends over the entire length of the recess (16).

14. A transfer apparatus according to one of claims 1 to 13 **characterised in that** on its top side (10a) the bar (10) has at least one groove (14) extending over its entire length.

15. A transfer apparatus according to one of claims 1 to 14 **characterised in that** at its ends (10c, 10d) the bar (10) has receiving means for the connection of further apparatuses.

## Revendications

1. Dispositif de transfert à une réception de produits de produits en forme de saucisse, déchargés d'une machine d'agrafage et pourvus d'éléments de suspension en forme de boucle, comprenant une lame (10), le long de laquelle les éléments de suspension peuvent être guidés dans la direction (T) de transport au moyen d'éléments convoyeurs, et un dispositif (VL, HL) avant et arrière de paliers pour la lame (10), qui ont un groupe (30, 34; 40, 42) de paliers droits, ainsi que gauches, qui sont montés respectivement par paire latéralement à la lame (10), dans lequel
les dispositifs (VL, HL) de paliers avant et arrière forment des guidages forcés et pouvant être entraînés des éléments de suspension, et dans lequel
les groupes ( 30, 34; 40, 42) de paliers droits et gauches des dispositifs (VL, HL) avant et arrière de paliers ont respectivement au moins un élément (30, 34) de palier d'appui ainsi que deux éléments (40, 42) de contre-palier, **caractérisé en ce que** l'élément (30, 34) de palier d'appui d'un groupe (30, 34; 40, 42) de paliers est formé par un arbre (30) de palier d'appui pouvant être entraîné, dont l'axe s'étend sensiblement parallèlement à la direction (T) de transport, les éléments (30, 34) de palier d'appui des deux groupes (30, 34; 40, 42) de paliers droits et/ou gauches des dispositifs (VL, HL) de paliers avant et arrière étant formés par un arbre (30) de palier d'appui commun.

2. Dispositif de transport suivant la revendication 1, **caractérisé en ce qu'**un guidage forcé des éléments de suspension est formé par une fente de guidage, se trouvant entre des éléments de palier, en contact entre eux et tournants, des groupes (30, 34; 40, 42) de paliers.

3. Dispositif de transport suivant la revendication 1 ou 2, **caractérisé en ce qu'**au moins une partie des éléments de palier des groupes (30, 34; 40, 42) de paliers sont pourvus sur le pourtour extérieur d'au moins une rainure (36) faisant le tour, en forme de filet dans la direction (T) de transport.

4. Dispositif de transport suivant la revendication 1, **caractérisé en ce que** les axes longitudinaux médians des éléments (30, 34) de palier d'appui et les axes longitudinaux médians des deux éléments (40, 42) de contre-palier d'un groupe (30, 34; 40, 42) de paliers sont disposés les uns par rapport aux autres, de manière à former, considéré dans un plan perpendiculaire à la direction (T) de transport, un triangle.

5. Dispositif de transport suivant la revendication 1 ou 4, **caractérisé en ce que** les deux éléments (40, 42) de contre-palier d'un groupe (30, 34; 40, 42) de paliers sont, considéré dans un plan perpendiculaire à la direction (T) de transport, l'un au-dessus de l'autre.

6. Dispositif de transport suivant l'une des revendications 1 à 5,
**caractérisé en ce que** l'élément (30, 34) de palier d'appui est, considéré dans un plan perpendiculaire à la direction (T) de transport, disposé latéralement aux deux éléments (30, 34) de contre-palier et entre eux.

7. Dispositif de transport suivant la revendication 1, **caractérisé en ce que** les arbres (30) de palier d'appui des groupes (30, 34; 40, 42) de paliers droits et gauches peuvent être entraînés en synchronisme et en sens contraire par un entraînement (A, G1, G2, W, K), de préférence commun.

8. Dispositif de transport suivant l'une des revendications 1 à 7,
**caractérisé en ce que** l'élément (30, 34) de palier d'appui d'un groupe (30, 34; 40, 42) de paliers a, sur le pourtour extérieur, un bombement (34) convexe ou un creux concave.

9. Dispositif de transport suivant l'une des revendications 1 à 8,
**caractérisé en ce que** le premier et le deuxième groupes (30, 34; 40, 42) de paliers sont en opposition l'un à l'autre sur les faces (10b) latérales de la lame (10).

10. Dispositif de transport suivant l'une des revendications 1 à 9,
**caractérisé en ce que** la lame (10) est pourvue d'évidements (16), qui se succèdent dans la direction (T) de transport de part et d'autre de la lame (10).

11. Dispositif de transport suivant la revendication 10, **caractérisé en ce que** les évidements (16) sont disposés sur les faces (10b) latérales de la lame (10) en s'opposant les uns aux autres transversalement à la direction (T) de transport.

12. Dispositif de transport suivant la revendication 10 ou 11, **caractérisé en ce que** les au moins deux éléments (40) de contre-palier d'un groupe (30, 32; 40, 42) de paliers sont disposés à l'intérieur respectivement d'un évidement (16) de la lame (10).

13. Dispositif de transport suivant l'une des revendications 11 à 12,
**caractérisé en ce que** l'élément (40) de contre-palier s'étend sur toute la longueur de l'évidement (16).

14. Dispositif de transport suivant l'une des revendications 1 à 13,
**caractérisé en ce que** la lame (10) a, sur son côté (10a) supérieur, au moins une rainure (14) s'étendant sur toute sa longueur.

15. Dispositif de transport suivant l'une des revendications 1 à 14,
**caractérisé en ce que** la lame (10) a, sur ses extrémités (10c, 10d) frontales, des moyens de réception pour le raccordement d'autres dispositifs.
